# EUROPÄISCHE PATENTSCHRIFT

(11) **EP 0 529 453 B1**
(45) Veröffentlichungstag und Bekanntmachung des Hinweises auf die Patenterteilung: **04.12.1996**
(21) Anmeldenummer: 92113966.3
(22) Anmeldetag: 17.08.1992
(51) Int. Cl.: C02F 1/52

(54) **Verfahren zur Abtrennung von schwerlösliche Sulfide bildenden Metallen aus technischen Abwässern**
Process for separating sparingly soluble sulfides forming metals from technical waste waters
Procédé pour séparer d'eaux usées techniques des métaux formant des sulphures difficilement solubles

(30) Priorität: 27.08.1991 DE 4128353
(43) Veröffentlichungstag der Anmeldung: 03.03.1993
(73) Patentinhaber: BASF Aktiengesellschaft, 67063 Ludwigshafen (DE)
(72) Erfinder: Schwarzbach, Joerg, Dr., W-6700 Ludwigshafen (DE)

(56) Entgegenhaltungen:
- EP-A- 0 349 671
- DE-A- 3 917 412
- DATABASE WPI Week 7627, Derwent Publications Ltd., London, GB; AN 76-50918X

## Beschreibung

Die vorliegende Erfindung betrifft ein verbessertes Verfahren zur Abtrennung von schwerlösliche Sulfide bildenden Metallen aus technischen Abwässern durch Zusetzen eines Fällmittels und anschließendes Abtrennen des gebildeten Niederschlags.

Als Beispiele für schwerlösliche Sulfide bildende Metalle seien Quecksilber, Silber und vor allem Kupfer genannt.

Insbesondere kupferhaltige Abwässer fallen in Galvanobetrieben und vor allem bei der Herstellung von Pigmenten oder Farbstoffen wie Kupfer-Phthalocyaninen oder Kupfer-Formazanen an und enthalten besonders im Fall der Pigmentherstellung zusätzlich Komplexbildner wie Phthalsäureanhydrid und Phthalimid, das als Ausgangsstoff für die Synthese eingesetzt wird bzw. als Zwischenprodukt anfällt, und Ammoniumionen, die aus dem bei der Synthese gebildeten Harnstoff entstehen, die die Kupferionen in Lösung halten und so ihre Abtrennung erheblich erschweren.

Der Kupfergehalt dieser Abwässer beträgt in der Regel etwa 500 bis 3000 ppm. Für eine Aufbereitung in einer Kläranlage soll jedoch ein Grenzwert von 0,5 ppm Kupfer nicht überschritten werden. Der Kupfergehalt in diesen Abwässern muß also deutlich gesenkt werden.

Aus der JP-OS-1497 (1988) ist ein Verfahren zur Abtrennung von Schwermetallen wie Quecksilber oder Kupfer bekannt, bei dem der pH-Wert des Abwassers zunächst auf etwa 4 eingestellt wird und dann zur Fällung Schwefelpulver und ein Reduktionsmittel wie Eisen (II) oxalat oder -thiosulfat direkt ohne vorheriges Mischen zugegeben werden. Nachteile dieses Verfahrens sind jedoch der hohe Fällmittelüberschuß (200- bis 3000fache stöchiometrische Menge) und lange Ausrührzeiten von mehreren Stunden.

Weiterhin sind Verfahren zur Abtrennung dieser Metalle bekannt, bei denen Eisen(II)sulfid als Fällmittel verwendet wird. Dieses kann in fester Form oder, wie in der US-A 4 102 784 beschrieben, in Form von wäßrigen Suspensionen eingesetzt werden, die durch Versetzen von Lösungen wasserlöslicher Sulfide wie Natriumsulfid mit Eisen(II)salzen wie Eisen(II)sulfat erhalten werden. Diese Verfahren haben jedoch den Nachteil, daß leicht unerwünschter Schwefelwasserstoff entwickelt wird und der pH-Wert des Fällmittel/Abwasser-Gemisches daher streng kontrolliert werden und im alkalischen Bereich liegen muß.

Der Erfindung lag daher die Aufgabe zugrunde, schwerlösliche Sulfide bildende Metalle auf einfache, wirtschaftliche und möglichst quantitative Weise unter Vermeidung der Entwicklung von Schwefelwasserstoff aus technischen Abwässern zu entfernen.

Demgemäß wurde ein Verfahren zur Abtrennung von schwerlösliche Sulfide bildenden Metallen aus technischen Abwässern durch Zusetzen eines Fällmittels und anschließendes Abtrennen des gebildeten Niederschlags gefunden, welches dadurch gekennzeichnet ist, daß man eine durch Mischen von Schwefel, einem Eisen(II)salz, Wasser und einer Base erhaltene Suspension als Fällmittel zusetzt, den pH-Wert des Abwassers auf > 4 bis 8 einstellt und den gebildeten sulfidischen Niederschlag auf übliche Weise abtrennt.

Das Molverhältnis von Eisen(II)salz zu Schwefel in der Fällmittel-Suspension kann stark variiert werden, in der Regel beträgt es jedoch 0,5:1 bis 10:1, vorzugsweise 1,5:1 bis 4:1, besonders bevorzugt etwa 2:1. Je nach den äblaufenden Fällungsreaktionen, beispielsweise wenn eine teilweise Reduktion des abzutrennenden Metalls eintritt, kann sich der stöchiometrische Schwefelbedarf auch auf ein Molverhältnis von etwa 3:1 bis 4:1 verringern.

Beim erfindungsgemäßen Verfahren können im Prinzip alle bekannten löslichen anorganischen Eisen(II)salze eingesetzt werden. Bevorzugt sind aus Kostengründen z.B. Eisen(II)chlorid und vor allem Eisen(II)sulfat, das als großtechnisches Abfallprodukt bei der Herstellung von Titandioxid anfällt.

Der Schwefel wird zweckmäßigerweise in Pulverform eingesetzt. Besonders vorteilhaft ist die Verwendung von Netzschwefel, einem Gemisch aus Schwefelpulver und einem Tensid wie Ligninsulfonat, das leicht dispergierbar ist. Aber auch herkömmlicher gemahlener Schwefel ist gut geeignet.

Bem erfindungsgemäßen Verfahren kann man beispielsweise so vorgehen, daß man den Schwefel und das Eisen(II)salz zuerst mit etwas Wasser anrührt. Diese Mischung versetzt man dann mit einer Base wie vor allem Natronlauge oder auch Kalilauge, Kalkwasser, Kalkmilch oder Soda, bis ein pH-Wert von mindestens 5 erreicht ist.

Der pH-Wert der Mischung ist an sich nicht kritisch, muß jedoch > 5 sein, damit folgende, an der zunehmenden Schwarzfärbung der entstehenden Suspension erkennbare Reaktion ablaufen kann:

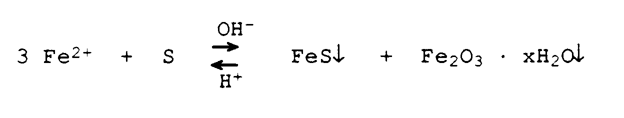

Bei zu starker Verdünnung der Reaktionsmischung mit Wasser oder bei Verwendung einer zu verdünnten Base (es empfiehlt sich z.B. die Verwendung von etwa 50 gew.-%iger Natronlauge) verlangsamt sich die Reaktion, und es muß länger und gegebenenfalls auch unter Beheizung auf etwa 50 bis 80°C nachgerührt werden. Nach Ablauf der Reaktion kann die Suspension durch Zusatz von Wasser oder der Base beliebig verdünnt werden.

Das in der Suspension frisch gebildete Eisen(II)sulfid FeS ist ein hervorragendes Mittel, um die Sulfide der abzutrennenden Metalle zu fällen. Da es im Gleichgewicht mit ebenfalls gebildeten Eisen(III)-hydroxiden Fe₂O₃ · xH₂O, die gewissermaßen als Fänger für Schwefelwasserstoff wirken, vorliegt, kann bei Zugabe von Säuren die Entwicklung von Schwefelwasserstoff durch Rückreaktion gemäß der obengenannten Gleichung im unkritischen Bereich gehalten werden.

Die erfindungsgemäße Fällmittel-Suspension wird in der Regel in solchen Mengen verwendet, daß pro mol eines abzutrennenden zweiwertigen Metalls mindestens 1 mol Schwefel und mindestens 2 mol Eisen(II)salz und pro mol eines abzutrennenden einwertigen Metalls mindestens 0,5 mol Schwefel und mindestens 1 mol Eisen(II)salz zum Einsatz kommen. Die Verwendung zu großer Überschüsse erübrigt sich verständlicherweise aus wirtschaftlichen Gründen.

Beim erfindungsgemäßen Verfahren geht man zweckmäßigerweise wie folgt vor:

Fällmittel-Suspension und zu behandelndes Abwasser werden, vorzugsweise nach ihrer Erwärmung auf etwa 50 bis 70°C, zusammengemischt, wobei sowohl Fällmittel-Suspension als auch Abwasser vorgelegt werden können.

Die Fällung kann jedoch auch sowohl bei tiefen Temperaturen, etwa bei Raumtemperatur, als auch bei hohen Temperaturen bis etwa beim Siedepunkt der Mischung vorgenommen werden.

Der pH-Wert des Gemisches wird dann durch Zugabe einer der obengenannten Basen auf einen Wert von > 4, in der Regel von 5 bis 10, vorzugsweise von 6 bis 9 eingestellt. Besonders bevorzugte pH-Bereiche sind abhängig vom jeweils eingesetzten Abwasser.

Der in gut filtrierbarer Form anfallende sulfidische Niederschlag kann in der Regel sofort durch übliche Filtration abgetrennt werden. Nachrührzeiten sind nicht erforderlich.

Bei der Durchführung des erfindungsgemäßen Verfahrens ist es zweckmäßig, übermäßigen Luftzutritt zu vermeiden. Das gilt insbesondere für die Herstellung der Fällmittel-Suspension, da sonst Eisen(II) zu Eisen(III) oxidiert wird und nicht mehr zu Bildung von Eisen(II)sulfid zur Verfügung steht. Aber auch bei der weiteren Verfahrensdurchführung hat es sich als vorteilhaft erwiesen, unter Schutzgas, beispielsweise Stickstoff, zu arbeiten.

Das erfindungsgemäße Verfahren wird üblicherweise bei Normaldruck durchgeführt, kann aber auch unter Druck durchgeführt werden.

Man kann sowohl diskontinuierlich als auch kontinuierlich arbeiten.

Eine bevorzugte Ausführungsform des erfindungsgemäßen Verfahrens betrifft die kontinuierliche Abtrennung von Kupfer. Die Fällmittel-Suspension wird dem Abwasser hier kontinuierlich aus einem Vorratsbehälter zudosiert. Die Dosierung wird dabei über das sich im Reaktionsgemisch einstellende Redoxpotential gesteuert, das u.a. vom Kupfergehalt und vom pH-Wert des Gemisches abhängt und für jedes Abwasser individuell zu ermitteln ist. Das Redoxpotential kann beispielsweise gegen eine Silber/Silberchlorid-Elektrode gemessen werden.

Eine besonders bevorzugte Anwendung des erfindungsgemäßen Verfahrens besteht in der Abtrennung von schwerlösliche Sulfide bildenden Metallen aus komplexbildnerhaltigen technischen Abwässern. Auch in Gegenwart starker Komplexbildner können die Metallrestgehalte unter den Grenzwert von 0,5 ppm gesenkt werden.

Von besonderem Vorteil sind weiterhin die niedrigen Kosten des erfindungsgemäßen Verfahrens, die aus der Anwendung von preisgünstigen Fällreagenzien, die gleichzeitig auch nur in nahezu stöchiometrischen Mengen eingesetzt werden, resultiert. Der erfindungsgemäß erhaltene sulfidische Niederschlag enthält das abzutrennende Metall daher in solchen Konzentrationen, daß sich eine Wiederverwertung lohnt und eine aufwendige Deponierung des Niederschlags überflüssig wird.

Beim erfindungsgemäßen Verfahren wird die Entwicklung von Schwefelwasserstoff vermieden. Außerdem erfolgt die Fällung außerordentlich schnell, Nachrührzeiten sind nicht erforderlich. Das erfindungsgemäße Verfahren ist daher besonders gut für eine kontinuierliche Anwendung geeignet.

### Beispiele

### Beispiele 1 bis 8

In eine Mischung aus a mol des Eisen(II)salzes und b mol Netzschwefel (80 Gew.-% Schwefel, 20 Gew.-% Ligninsulfonat; berechnet auf 100 Gew.-% Schwefel) wurden unter Rühren c mol 50 gew.-%ige Natronlauge gegeben. Die unter Eigenerwärmung entstehende schwarze Suspension wurde mit d ml Wasser verdünnt.

Zu e g dieser Fällmittel-Suspension wurden 100 g eines Abwassers gegeben, das bei der Reinigung des nach dem Harnstoff-Phthalsäureanhydrid-Verfahren hergestellten Kupferphthalocyanins durch Verkochen mit verdünnter Schwefelsäure (nach der DE-A-31 06 541, Beispiel 1) erhalten wurde und u.a. 1500 ppm Kupfer, 0,5 Gew.-% Ammonium und 0,17 Gew.-% organisch gebundenen Stickstoff enthielt und einen pH-Wert von 0,7 aufwies.

Nach Erwärmen auf 50°C wurde der pH-Wert des Gemisches durch Zugabe von 50 gew.-%iger Natronlauge auf den Wert W eingestellt. Der Niederschlag wurde sofort abfiltriert.

Die quantitative Bestimmung des Kupferrestgehaltes im Filtrat erfolgte in üblicher Weise durch Atomabsorptionsspektroskopie.

Die Einzelheiten dieser Versuche sowie deren Ergebnisse sind Tabelle 1 zu entnehmen.

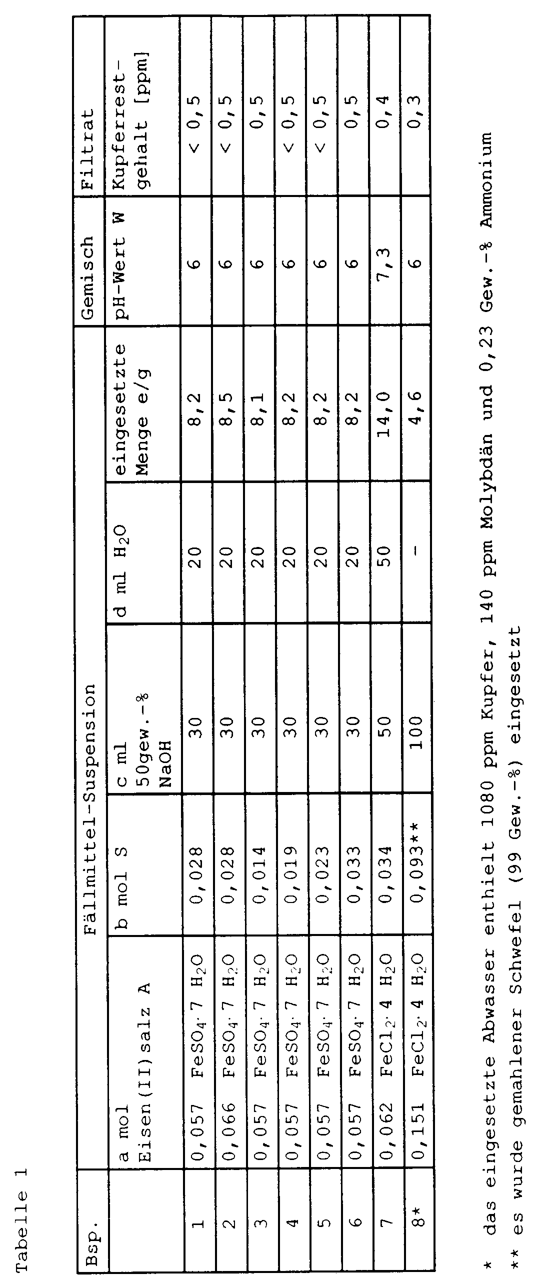

### Beispiel 9

Durch Verrühren von 70 g (0,246 mol) Eisen(II)sulfat-heptahydrat und 4 g (0,124 mol) gemahlenem Schwefel (99 Gew.-%) in 110 g Wasser und Zugabe von 60 g 50 gew.-%iger Natronlauge wurde unter Eigenerwärmung auf 60 bis 70°C eine Fällmittel-Suspension hergestellt.

Weiterhin wurde ein Musterabwasser durch Lösen von 5,02 g (0,031 mol) wasserfreiem Kupfersulfat und 12 g (0,036 mol) Ethylendiamintetraessigsäuredinatriumsalz (Na₂EDTA) in Wasser, Zugabe von 50 g konzentrierter Schwefelsäure und Auffüllen mit Wasser auf 1000 g hergestellt (Kupfergehalt: 2000 ppm).

200 g dieses Musterabwassers wurden auf 50°C erwärmt und mit 1/10 der Fällmittel-Suspension versetzt. Durch Zugabe von 50 gew.-%iger Natronlauge wurde dann ein pH-Wert von 9 eingestellt. Nach 5 min wurde vom Niederschlag abfiltriert.

Alle Schritte wurden unter Schutzgas (Stickstoff) durchgeführt.

Das Filtrat enthielt < 0,1 ppm Kupfer (bestimmt durch Atomabsorptionsspektroskopie).

### Vergleichsbeispiel

Die Entkupferung des Musterabwassers aus Beispiel 9 wurde nicht mit Hilfe einer erfindungsgemäßen Fällmittel-Suspension, sondern durch direkte Zugabe von Schwefel und Eisen(II)sulfat durchgeführt.

Dazu wurden 200 g des Musterabwassers auf 50°C erwärmt und dann nach Zugabe von 0,4 g gemahlenem Schwefel und 7,0 g Eisen(II)sulfat-heptahydrat mit 50 gew.-%iger Natronlauge auf den pH-Wert 9 gestellt. Nach 5 min wurde vom Niederschlag abfiltriert. Es wurde ebenfalls unter Stickstoff gearbeitet.

Das Filtrat enthielt 9 ppm Kupfer (Atomabsorptionsspektroskopie).

### Beispiele 10 und 11

Zu 2,9 g der Fällmittel-Suspension aus Beispiel 8 wurden 100 g einer schwefelsauren 0,01 molaren Quecksilber(II)chlorid-Lösung (pH = 0,5) gegeben. Nach Erwärmen auf 60°C wurde der pH-Wert des Gemisches durch Zugabe von 50 gew.-%iger Natronlauge auf den Wert W eingestellt. Der Niederschlag wurde sofort abfiltriert.

Die eingestellten pH-Werte sowie die durch Atomabsorptionsspektroskopie ermittelten Quecksilberrestgehalte der Filtrate sind Tabelle 2 zu entnehmen.

**Tabelle 2**

| Beispiel | pH-Wert W des Gemisches | Quecksilberrestgehalt des Filtrats [ppm] |
|---|---|---|
| 10 | 5 | 0,2 |
| 11 | 6 | 0,01 |

## Patentansprüche

1. Verfahren zur Abtrennung von schwerlösliche Sulfide bildenden Metallen aus technischen Abwässern durch Zusetzen eines Fällmittels und anschließendes Abtrennen des gebildeten Niederschlags, dadurch gekennzeichnet, daß man eine durch Mischen von Schwefel, einem Eisen(II)salz, Wasser und einer Base erhaltene Suspension als Fällmittel zusetzt, den pH-Wert des Abwassers auf > 4 einstellt und den gebildeten sulfidischen Niederschlag auf übliche Weise abtrennt.

2. Verfahren nach Anspruch 1, dadurch gekennzeichnet, daß die Fällmittel-Suspension 0,5 bis 10 mol des Eisen(II)salzes pro mol Schwefel enthält.

3. Verfahren nach Anspruch 1 oder 2, dadurch gekennzeichnet, daß die Fällmittel-Suspension 1,5 bis 4 mol des Eisen(II)salzes pro mol Schwefel enthält.

4. Verfahren nach den Ansprüchen 1 bis 3, dadurch gekennzeichnet, daß die Fällmittel-Suspension einen pH-Wert von ≧ 5 aufweist.

5. Verfahren nach den Ansprüchen 1 bis 4, dadurch gekennzeichnet, daß die zugesetzte Fällmittel-Suspension
a) im Fall eines abzutrennenden zweiwertigen Metalls mindestens 1 mol Schwefel pro mol Metall und
b) im Fall eines abzutrennenden einwertigen Metalls mindestens 0,5 mol Schwefel pro mol Metall enthält.

6. Verfahren nach den Ansprüchen 1 bis 5, dadurch gekennzeichnet, daß die zugesetzte Fällmittel-Suspension
a) im Fall eines abzutrennenden zweiwertigen Metalls mindestens 2 mol des Eisen(II)salzes pro mol Metall und
b) im Fall eines abzutrennenden einwertigen Metalls mindestens 1 mol des Eisen(II)salzes pro mol Metall enthält.

7. Verfahren nach den Ansprüchen 1 bis 6, dadurch gekennzeichnet, daß man als Eisen(II)salz Eisen(II)sulfat oder Eisen(II)chlorid einsetzt.

8. Verfahren nach den Ansprüchen 1 bis 7, dadurch gekennzeichnet, daß man es zur Abtrennung von schwerlösliche Sulfide bildenden Metallen aus komplexbildnerhaltigen technischen Abwässern anwendet.

## Claims

1. A process for removing metals that form sparingly soluble sulfides from industrial wastewaters by adding a precipitant and subsequently separating off the resulting precipitate, which comprises adding as precipitant a suspension obtained by mixing sulfur, an iron(II) salt, water and a base, adjusting the wastewater pH to > 4, and separating off the resulting sulfidic precipitate in a conventional manner.

2. A process as claimed in claim 1, wherein the suspension precipitant comprises from 0.5 to 10 mol of iron(II) salt per mole of sulfur.

3. A process as claimed in claim 1 or 2, wherein the suspension precipitant comprises from 1.5 to 4 mol of iron(II) salt per mole of sulfur.

4. A process as claimed in any of claims 1 to 3, wherein the suspension precipitant has a pH of ≧5.

5. A process as claimed in any of claims 1 to 4, wherein the added suspension precipitant comprises
a) at least 1 mol of sulfur per mole of metal if the metal to be removed is divalent, or
b) at least 0.5 mol of sulfur per mole of metal if the metal to be removed is monovalent.

6. A process as claimed in any of claims 1 to 5, wherein the added suspension precipitant comprises
a) at least 2 mol of iron(II) salt per mole of metal if the metal to be removed is divalent, or
b) at least 1 mol of iron(II) salt per mole of metal if the metal to be removed is monovalent.

7. A process as claimed in any of claims 1 to 6, wherein the iron(II) salt used is iron(II) sulfate or iron(II) chloride.

8. A process as claimed in any of claims 1 to 7, employed for removing metals that form sparingly soluble sulfides from industrial wastewaters comprising complexing agents.

## Revendications

1. Procédé pour séparer d'eaux usées techniques des métaux formant des sulfures difficilement solubles, par addition d'un agent de précipitation, suivie de séparation du dépôt formé, caractérisé en ce que l'on ajoute, en tant qu'agent de précipitation, une suspension obtenue par mélange de soufre, d'un sel de fer(II), d'eau et d'une base, on règle le pH des eaux usées a une valeur supérieure a 4 et on sépare de façon usuelle le précipité sulfuré formé.

2. Procédé selon la revendication 1, caractérisé en ce que la suspension constituant l'agent de précipitation contient de 0,5 à 10 moles du sel de fer(II) par mole de soufre.

3. Procédé selon la revendication 1 ou 2, caractérisé en ce que la suspension constituant l'agent de précipitation contient de 1,5 a 4 moles du sel de fer(II) par mole de soufre.

4. Procédé selon l'une quelconque des revendications 1 à 3, caractérisé en ce que la suspension constituant l'agent de précipitation présente un pH ≧ 5.

5. Procédé selon l'une quelconque des revendications 1 à 4, caractérisé en ce que la suspension ajoutée, constituant l'agent de précipitation, contient
a) au moins 1 mole de soufre par mole de métal dans le cas d'un métal bivalent a séparer et
b) au moins 0,5 mole de soufre par mole de métal dans le cas d'un métal monovalent à séparer.

6. Procédé selon l'une quelconque des revendications 1 à 5, caractérisé en ce que la suspension ajoutée, constituant l'agent de précipitation, contient
a) au moins 2 moles du sel de fer(II) par mole de métal dans le cas d'un métal bivalent à séparer et
b) au moins 1 mole du sel de fer(II) par mole de métal dans le cas d'un métal monovalent à séparer.

7. Procédé selon l'une quelconque des revendications 1 à 6, caractérisé en ce que l'on utilise, comme sel de fer(II), du sulfate de fer(II) ou du chlorure de fer(II).

8. Procédé selon l'une quelconque des revendications 1 à 6, caractérisé en ce qu'on l'applique pour séparer, d'eaux usées techniques contenant des complexants, des métaux formant des sulfures difficilement solubles.
